Europäisches Patentamt

European Patent Office

Office européen des brevets

(19)

(11) Veröffentlichungsnummer: **0 347 511**

**A2**

(12) # EUROPÄISCHE PATENTANMELDUNG

(21) Anmeldenummer: 88810795.0

(51) Int. Cl.⁴: **G11B 7/00**

(22) Anmeldetag: 17.11.88

(30) Priorität: 19.11.87 CH 4537/87

(43) Veröffentlichungstag der Anmeldung:
27.12.89 Patentblatt 89/52

(84) Benannte Vertragsstaaten:
AT BE DE ES FR GB GR IT LU NL SE

(71) Anmelder: **Matthys, Kurt**
**Thurgauerstr. 70**
**CH-8050 Zürich(CH)**

(72) Erfinder: **Matthys, Kurt**
**Thurgauerstr. 70**
**CH-8050 Zürich(CH)**

(54) **Bildplatte mit zusätzlicher Audio- + Signalpiste.**

(57) Bildplatte mit einer zusätzlichen Audio- & Signalpiste die getrennt von den Bild-und Originaltonsignalen aufgezeichnet, und von zwei getrennten Lasersystemen abgetastet werden.

FIGUR 1.

"POLYMEDIA – BILDPLATTE" Ausführungsbeispiel.

EP 0 347 511 A2

## POLYMEDIA - BILDPLATTE

Der Sinn der getrennten Anordnung von Video- und Audiosignalen auf einer Bildplatte ist in der Patentanmeldung Nr. 5884/82-9 beschrieben. Es geht einerseits darum, ein audiovisuelles Programm auf der selben Bildplatte in mehreren Sprachen zu produzieren und auf Wunsch in irgend einer dieser Sprachen abzurufen. Andererseits aber geht es auch darum, akustische Signale auch dann empfangen zu können, wenn das Gerät auf Standbild geschaltet ist. Dann nämlich ist bei den herkömmlichen Bildplatten keine akustische Information mehr möglich, da der Laserstrahl auf einer "Rille" stehen bleibt und nur noch das betreffende Einzelbild abtastet.

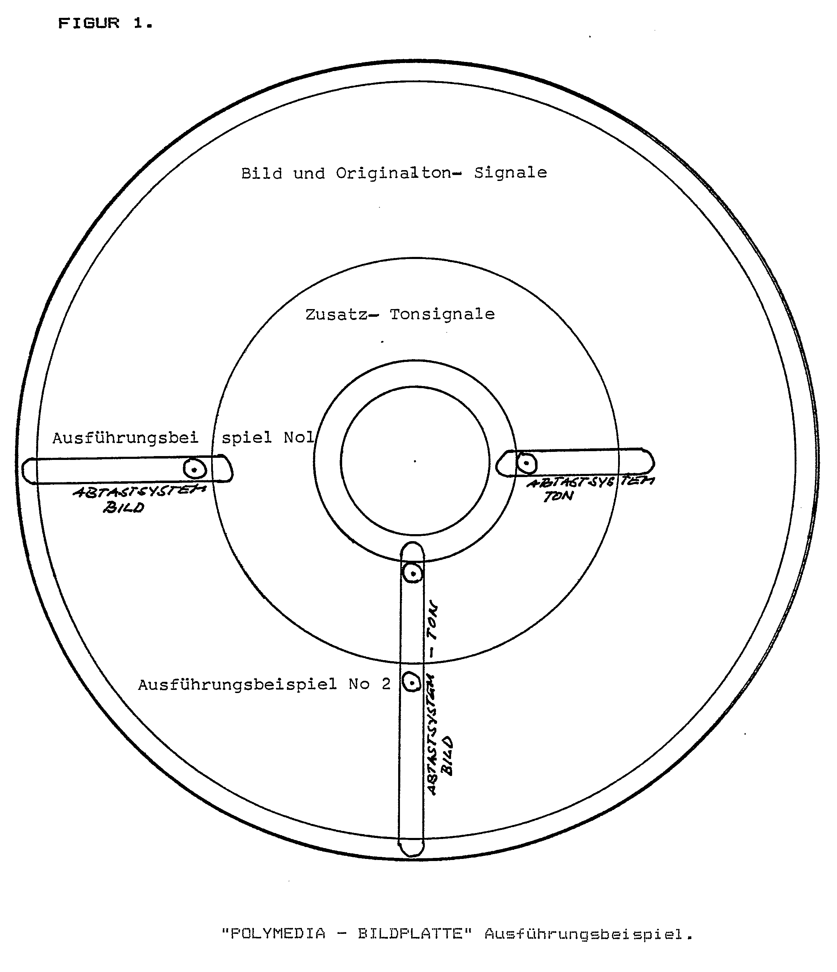

### Ansprüche

1. Laserbildplatte zur Erzeugung von Videobildern und akustischen Informationen, dadurch gekennzeichnet, dass die Videosignale und zusätzliche akustische Signale, beispielsweise für den Kommentar, nicht wie üblich auf der selben Rille durch einen Laser-Abtaster lesbar sind, sondern getrennt aufgezeichnet und durch zwei verschiedene Laserstrahlen abgetastet werden, wobei die Bildinformation mit dem Originalton auf der einen Seite der Bildplatte und die Toninformationen auf der anderen Seite der Bildplatte angebracht und durch zwei sich im weitesten Sinne gegenüberliegende Abtastorgane abgetastet werden können.

2. Bildplatte nach Anspruch 1, dadurch gekennzeichnet, dass die Bild- und Toninformation auf der gleichen Seite der Bildplatte angebracht und durch zwei getrennte Systeme von der gleichen Plattenseite her abgetastet werden können.
Interaktive Bildplatte mit getrennt aufgezeichneten Video- und Audiosignalen, kompatibel mit dem in der Patentanmeldung 5884/82-9 beschriebenen "POLYMEDIA-SYSTEM" Gerät.

FIGUR 1.

Bild und Originalton- Signale

Zusatz- Tonsignale

Ausführungsbei spiel No1

ABTASTSYSTEM
BILD

ABTASTSYSTEM
TON

Ausführungsbeispiel No 2

ABTASTSYSTEM – TON

ABTASTSYSTEM
BILD

"POLYMEDIA – BILDPLATTE" Ausführungsbeispiel.